# EUROPÄISCHE PATENTSCHRIFT

(11) **EP 0 614 494 B1**
(45) Veröffentlichungstag und Bekanntmachung des Hinweises auf die Patenterteilung: **27.03.1996**
(21) Anmeldenummer: 92923777.4
(22) Anmeldetag: 24.11.1992
(51) Int. Cl.: C14C 9/00, C08F 299/08

(54) **VERWENDUNG VON COPOLYMERISATEN MIT POLYSILOXAN EINHEITEN ZUR BEHANDLUNG VON LEDER UND PELZEN**
USE OF COPOLYMERS CONTAINING POLYSILOXANE UNITS IN THE TREATMENT OF LEATHERS AND FURS
APPLICATION DE COPOLYMERISATS A MOTIFS POLYSILOXANNES POUR LE TRAITEMENT DES CUIRS ET DES PEAUX

(30) Priorität: 28.11.1991 DE 4139090
(43) Veröffentlichungstag der Anmeldung: 14.09.1994
(73) Patentinhaber: Chemische Fabrik Stockhausen GmbH, D-47805 Krefeld (DE)
(72) Erfinder: DAHMEN, Kurt, D-4050 Mönchengladbach (DE); MERTENS, Richard, D-4150 Krefeld (DE); KAUSSEN, Manfred, D-5100 Aachen (DE); LOHMANN, Helmut, D-4150 Krefeld (DE); KILIAN, Horst, D-4150 Krefeld (DE)
(74) Vertreter: Klöpsch, Gerald, Dr.-Ing. Patentanwalt
(86) Internationale Anmeldenummer: EP9202698
(87) Internationale Veröffentlichungsnummer: WO9311268

(56) Entgegenhaltungen:
- EP-A- 0 408 311
- DE-A- 3 800 629
- DE-A- 3 931 039
- DE-B- 2 629 748
- FR-A- 2 038 336
- DATABASE WPIL Week 8325, Derwent Publications Ltd., London, GB; AN 83-60100K

## Beschreibung

Diese Erfindung betrifft die Verwendung von speziellen Copolymerisaten, die Monomere mit einer Polysiloxangruppe einpolymerisiert enthalten, zur Behandlung von Leder und Pelzfellen. Durch die Behandlung mit den Copolymerisaten erhält man weiche, füllige Leder oder wattig-weiche Pelzfelle mit ausgezeichneten wasserabweisenden Eigenschaften.

Die EP-A-0 372 746 beschreibt ein Lederbehandlungsmittel auf Basis eines amphiphilischen Copolymers aus einem überwiegenden Anteil wenigstens eines hydrophoben Monomers ausgewählt aus langkettigen Alkyl-(meth)acrylaten, langkettigen Alkoxy- oder Alkylphenoxy(polyethylenoxid) (meth)-acrylaten, alpha-Olefinen, Vinylestern von langkettigen Carbonsäuren und Mischungen hiervon und einem geringeren Anteil wenigstens eines hydrophilen, wasserlöslichen ethylenisch ungesättigten sauren oder basischen Monomeren. Die mit diesen Polymeren ausgerüsteten Leder haben einen weichen Griff, aber mangelnde hydrophobe Eigenschaften, die erst durch eine nachträgliche Fixierung mit gerbenden Mineralsalzen verbessert werden können.

Aus Gründen der Umweltbelastung muß der Einsatz von gerbenden Mineralsalzen in der Lederindustrie deutlich reduziert werden. Eine nachträgliche Fixierung mit Mineralsaizen ist deshalb nicht mehr wünschenswert und verlangt zudem einen zusätzlichen Arbeitsschritt.

Die deutschen Offenlegungsschriften 39 26 168, 39 26 167 und 39 31 039 beschreiben Copolymere aus langkettigen Alkylvinyläthern und ungesättigten Dicarbonsäureanhydriden bzw. langkettigen Olefinen und ungesättigten Dicarbonsäureanhydriden bzw. langkettigen, ungesättigten Estern und ungesättigten Carbonsäuren zum Hydrophobieren von Ledern. Die ausgerüsteten Leder zeigen im Bally-Penetrometer eine Wasseraufnahme von 19,5 %, (z.B. DE-OS 39 31 039).

In der DE-OS 38 00 629 werden carboxylgruppenhaltige Polysiloxane, die in neutralisierter Form vorliegen, beschrieben - die Funktionalität beträgt 2 - mit denen Leder und Pelze hydrophobiert werden sollen.

Die EP-A-0 408 311 betrifft ein als Haarpfiegemittel verwendbares Polymer, enthaltend 0 bis 84,9 Gew.-% eines hydrophoben ethylenisch ungesättigten Monomeren,0,1 bis 85 Gew.-% eines ethylenisch ungesättigten Monomeren mit einer Polysiloxangruppe, wobei das Monomere wenigstens eine ungesättigte radikalisch polymerisierbare Gruppe und eine Polysiloxangruppe der Formel 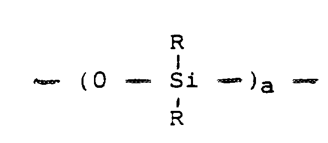 in der a = 1 bis 150 ist, aufweist,
sowie 15 bis 99,9 Gew.-% eines hydrophilen ethylenisch ungesättigten Monomeren, ausgewählt aus radikalisch polymerisierbaren kationischen, anionischen, nichtionischen oder amphoterischen Monomeren. Vorzugsweise setzt man zur Haarfestigung ein Polymer aus 40 bis 84,5 Gew.-% des hydrophoben Monomeren, 0,5 bis 70 Gew.-% des polysiloxangruppenhaltigen Monomeren und 15 bis 59,5 Gew.-% des hydrophilen Monomeren ein. Das Haarpflegemittel wird in Mengen von 0,1 bis 10 Gew.-% in üblichen kosmetischen Zusammensetzungen eingesetzt.

Aufgabe der vorliegenden Erfindung ist es, die aus der EP-A-408 311 bekannten Copolymerisate für einen neuartigen Verwendungszweck einzusetzen, nämlich zur Behandlung von Ledern und Pelzfellen.

Ebenfalls zum Stand der Technik gehört die Hydrophobierung von Ledern mittels Polysiloxanen, die aus organischer Lösung oder aus wäßriger Emulsion erfolgt. Bei Anwendung einer wäßrigen Emulsion muß das zur Emulsionsbereitung erforderliche Emulgatorsystem durch Zusatz von gerbenden Metallsalzen inaktiviert werden, eine - wie oben erwähnt - unerwünschte Verfahrensweise.

Unabhängig von der Darbietung führen die nicht gebundenen Polysiloxane aufgrund ihrer Migration im Leder zu Schwierigkeiten bei der Haftfestigkeit von Zurichtungen und bei der Verklebung von Ledern z. B. während der Schuhherstellung.

Aufgabe der vorliegenden Erfindung ist es insbesondere, eine verbesserte Ausrüstung von Ledern und Pelzfellen bezüglich Weichheit, Griff und Hydrophobierung mit Hilfe von emulgatorfreien Polysiloxan-Copolymerisaten bereitzustellen, die die obengenannten Nachteile ausschalten.

Diese Aufgabe wird erfindungsgemäß gelöst durch die Behandlung von Ledern und Pelzfellen zur Weichmachung, Fettung oder zur Hydrophobausrüstung mittels Copolymerisaten, die
a) 20 bis 70 Gew.-% eines hydrophoben Monomeren, ausgewahlt aus langkettigen alpha-Olefinen mit 12 bis 30 C-Atomen, langkettigen Alkyl(meth)acrylaten mit 12 bis 30 C-Atomen im Alkylteil, Vinylestern von langkettigen Carbonsäuren mit 12 bis 30 C-Atomen, langkettigen Vinyläthern mit 12 bis 30 C-Atomen oder Mischungen dieser Monomeren,
b) 1 bis 60 Gew.-% eines oder mehrerer Monomeren mit einer Polysiloxangruppe der Formeln (I) und/oder (II):

   A - Si(R¹)₂ - [OSi(R¹)₂]ₙ - R (I)

   (R¹)₃Si [OSi(R¹)₂]n [OSiR¹A]_{z} Si(R¹)₃ (II)

   wobei die Struktureinheiten [OSi(R¹)₂] und [OSiR¹A] in Formel (II) statistisch über die Kette verteilt sein sollen und worin R¹ = Phenyl oder Methyl, R = A, Phenyl oder Alkyl mit 1 bis 30 C-Atomen, n = 2 - 100, z = 1 - 3 bedeuten und A eine ungesättigte, radikalisch polymerisierbare Gruppe ist, ausgewählt aus:

   CH₂ = CH - (CH₂)ₘ ―

   CH₂ = CH - CH₂ - X - (CH₂)p ―

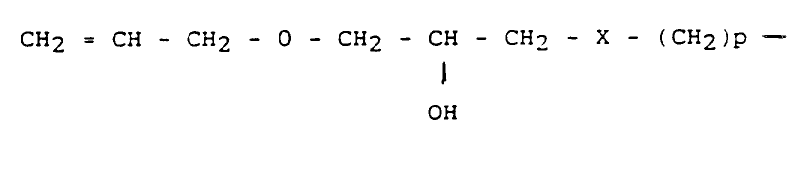

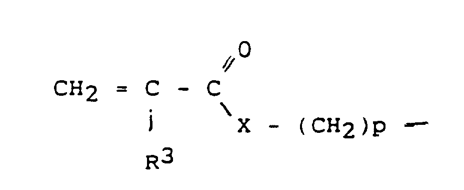

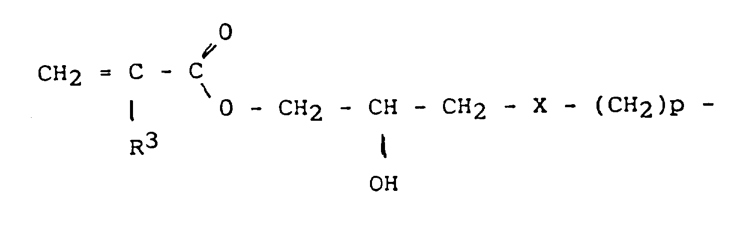

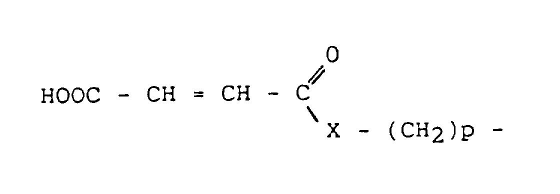

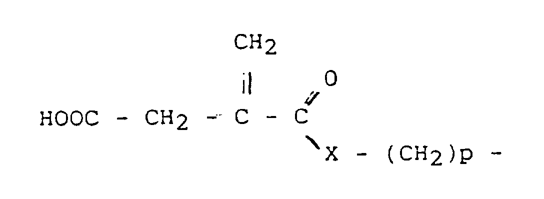

   oder 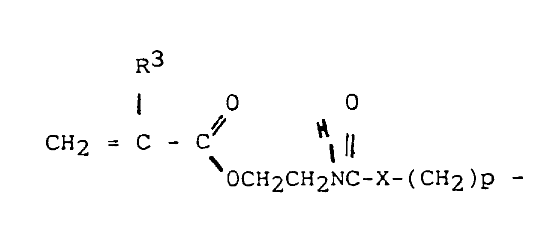 und m = 0 bis 10, p = 1 bis 4, R³ = H oder CH₃ und X = 0 oder NH bedeuten,
c) 20 bis 35 Gew.-% wasserlösliche, ungesättigte polymerisierbare, Säuregruppen enthaltende Monomere und/oder ungesättigte C₄ - C₆ Dicarbonsäureanhydride und/oder Halbester und/oder Halbamide von ungesättigten C₄ - C₆ Dicarbonsäuren oder Mischungen dieser Monomeren einpolymerisiert enthalten, in teilneutralisierter Form als wäßrige Lösung oder Dispersion.

Vorzugsweise addiert sich die Summe aus a), b) und c) zu 100 Gew.-%.

Man kann mit Hilfe dieser Copolymeren eine verbesserte Ausrüstung von Ledern und Pelzen bezüglich Weichheit, Griff und Hydrophobierung gegenüber Fettungs- und Hydrophobierungsmitteln des Standes der Technik erreichen.

Die Copolymerisate werden durch radikalische Substanz- oder Lösungspolymerisation der Monomeren aus den Gruppen (a), (b) und (c) bei Temperaturen von 50 bis 200°C hergestellt.

Geeignete Monomere der Gruppe (a) sind alpha-Olefine mit wenigstens 12 Kohlenstoffatomen, wie z.B. Dodecen, Tetradecen, Hexadecen, Octadecen, C₂₀-Olefin-1, C₂₄-Olefin-1, C₃₀-Olefin-1 oder die technischen Gemische verschiedener Siedefraktionen.

Als langkettige Alkyl(meth)acrylate werden Dodecyl-(meth)-acrylat, Tetradecyl(meth)acrylat, Hexadecyl(meth)acrylat, Stearyl(meth)acrylat, Oleyl(meth)acrylat, n-Eicosyl(meth)-acrylat, n-Docosyl(meth)acrylat oder die Ester aus (Meth)-acrylsäure und technischen Fettalkohol-Gemischen, wie z.B. C₁₂/C₁₄-Alkohol, C₁₄-C₁₈-Alkohol oder C₂₀-C₂₂-Alkohol verwendet.

Als Monomere der Gruppe (a) kommen ebenfalls Vinylester von Carbonsäuren mit 12 bis 30 C-Atomen in Betracht. Solche Monomeren sind z.B. Vinyllaurat, Vinylpalmitat, Vinylstearat, Vinyloleat oder Vinyltalgfettsäureester. Auch langkettige Vinyläther, wie z.B. Dodecylvinyläther, Tridecylvinyläther, Hexadecylvinyläther, Octadecylvinyläther, Oleylvinyläther oder Tetracosylvinyläther sind als Monomere der Gruppe (a) geeignet.

Als Komponenten der Gruppe (b) werden radikalisch polymerisierbare Monomere mit einer Polysiloxangruppe verwendet, die durch die allgemeinen Formeln (I) und (II) beschrieben werden können:

A - Si(R¹)₂ - [OSi(R¹)₂]n - R (I)

(R¹)₃ Si [OSi(R¹)₂]n [OSiR¹A]_{z} Si(R¹)₃ (II)

wobei die Struktureinheiten [OSi(R¹)₂] und [OSiR¹A] in Formel (II) statistisch über die Kette verteilt sein sollen und worin R¹ = Phenyl oder Methyl, R = A, Phenyl oder Alkyl mit 1 bis 30 C-Atomen, n = 2 - 100, z = 1 - 3 bedeuten und A eine ungesättigte, radikalisch polymersisierbare Gruppe ist, ausgewählt aus:

CH₂ = CH - (CH₂)m ―,

CH₂ = CH - CH₂ - X - (CH₂)ₚ ―,

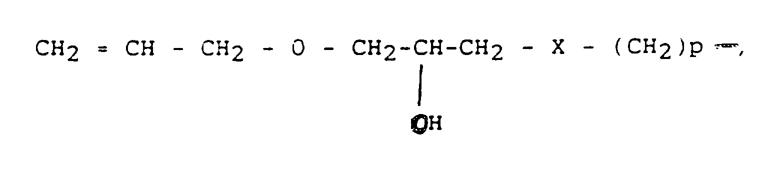

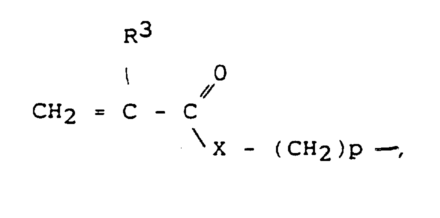

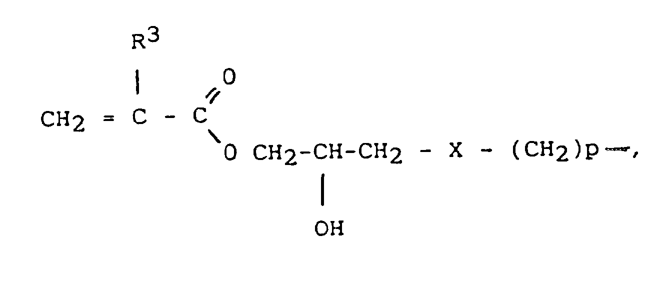

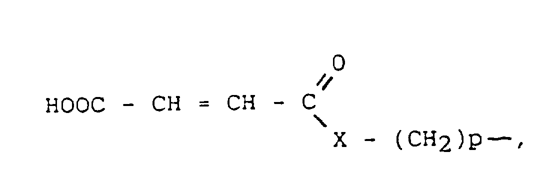

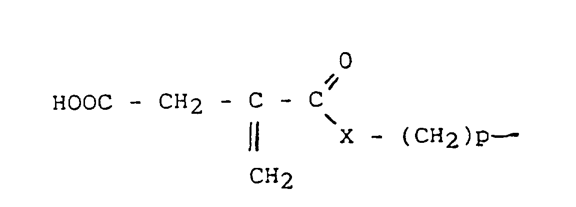

oder 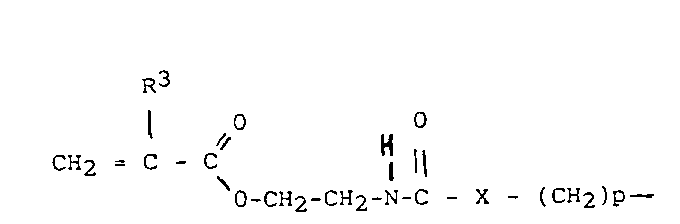 mit m = 0 - 10, p = 1 - 4, R³ = H oder Methyl und X = 0 oder N.

### Beispielhaft seien folgende Monomere (b) genannt:

alpha, omega-Divinylpolydimethylsiloxan, alpha, omega-Divinylpoly diphenylsiloxan, Allylpolydimethylsiloxan, alpha, omega-Diallyloxypropylpolydimethylsiloxan, alpha, omega-Di(meth)acryloyloxypropylpolydimethylsiloxan, alpha, omega-Di(meth)acryloyloxy(2-hydroxy-3-propoxypropyl)polydimethylsiloxan, alpha, omega-Di(meth)acryl- amidopropylpolydiphenylsiloxan, [Meth)acrylamidopropyl polydimethylsiloxan, Maleoyloxypropylpolydimethylsiloxan, alpha, omega-Dimaleamidopropylpolydimethylsiloxan N-(2-(meth) acryloyloxyethyl)carbamyloxypropyl-polydimethylsiloxan, Dimaleamidopropylpolydimethylsiloxan, N-(2-(meth)acryloyl-oxyethyl)carbamyloxypropylpolydimethylsiloxan, Poly(dimethylsiloxan-co-methylvinylsiloxan), Poly(dimethylsiloxan-co-methyl(meth)-acryloyloxyethylsiloxan) und Poly(dimethylsiloxan-co-methylmaleamidopropylsiloxan).

Die Monomeren der Gruppe (c) sind ausgewählt aus obengenannten wasserlöslichen, ungesättigten, säuregruppentragenden Monomeren wie beispielsweise Sulfonsäuren und Carbonsäuren, ungesättigten C₄-C₆ Dicarbonsäureanhydriden und Halbestern oder Halbamiden von ungesättigten C₄-C₆ Dicarbonsäuren, z.B. (Meth)acrylsäure, Itaconsäure, Maleinsäure, Acrylamido--2-methylpropansulfonsäure,Vinylsulfonsäure, Methallylsulfonsäure, Styrolsulfonsäure, Maleinsäureanhydrid, Itaconsäureanhydrid Methylenmalonsäureanhydrid und die Halbester bzw. Halbamide der Maleinsäure, Fumarsäure, Itaconsaure oder Methylenmalonsäure. Die in Betracht kommenden primären und sekundären Amine, aus denen die Halbamide durch Reaktion mit den Dicarbonsäuren oder Dicarbonsäureanhydriden hergestellt sind, können 1 bis 30 C-Atome aufweisen, wie z.B. Methylamin, Dimethylamin, Propylamin, Dibutylamin, Octylamin, Cyclohexylamin, Dodecylamin, Stearylamin, Oleylamin, Ethanolamin oder Propanolamin. Die Halbester werden aus den Dicarbonsauren bzw. den Anhydriden mit Alkoholen hergestellt.
Geeignete Alkohole sind z.B. Methanol, Ethanol, Isopropanol, n- , i- und/oder tert. Butanol, Cyclohexanol, Octanol, Dodecanol, Stearylalkohol, Ocenol, Behenylalkohol oder die technischen Fettalkoholschnitte wie C₁₂-C₁₄-Alkohol oder C₁₆-C₁₈-Alkohol, sowie Isopropylglykol und n-, i-und/oder tert.- Butylglykol.

Die Herstellung der Copolymerisate erfolgt durch radikalische Polymerisation bei Temperaturen von 50 bis 200°C als Substanz- oder Lösungspolymerisation. Die Substanzpolymerisation wird bevorzugt, falls aber das Molgewicht der Copolymeren bzw. die Viskosität der Polymermasse zu hoch ist und Schwierigkeiten im Handling auftreten, kann ein Lösungsmittel zur Verdünnung mitverwendet werden. Bevorzugte Lösungsmittel sind solche, die auch in Rezepturen zur Lederausrüstung eingesetzt werden, wie z.B. Olefine/Paraffine, hochsiedende Aromaten, Fettsäureester, Triglyceride oder Butylglykol.

Das Molekulargewicht der Copolymerisate liegt zwischen 1000 und 40.000 g/Mol und kann durch die Polymerisationstemperatur, die Initiatormenge und evtl. durch Regler gesteuert werden. Zur Auslösung der Polymerisation werden die bekannten Polymerisationsinitiatoren in einer Menge von 0,1 - 7 Gew.-% (bezogen auf die Masse der Monomeren) verwendet, aus denen der Fachmann leicht die geeignetsten Katalysatoren für eine gewünschte Polymerisationstemperatur auswählen kann.

Die Monomeren der Gruppe (b), die die Copolymerisate einpolymerisiert enthalten, können auch während der Polymerisation gebildet werden durch z.B. Reaktion eines ungesättigten Dicarbonsäureanhydrids, einer ungesättigten Glycid-Verbindung oder einer ungesättigten Isocyanat-Verbindung mit einem Hydroxy- oder Amino-funktionellen Polysiloxan. Eine Übersicht hierüber geben die folgenden Reaktionsgleichungen:

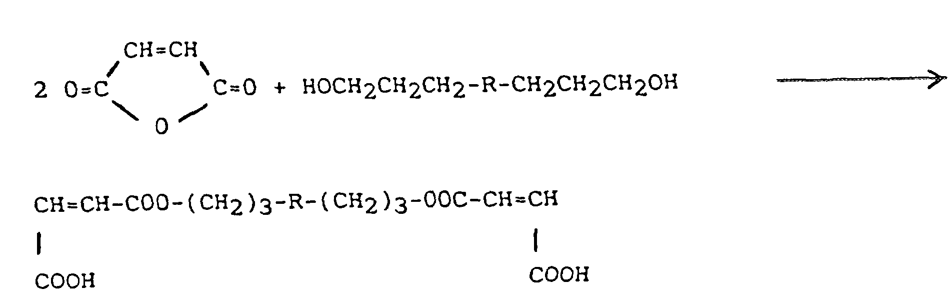

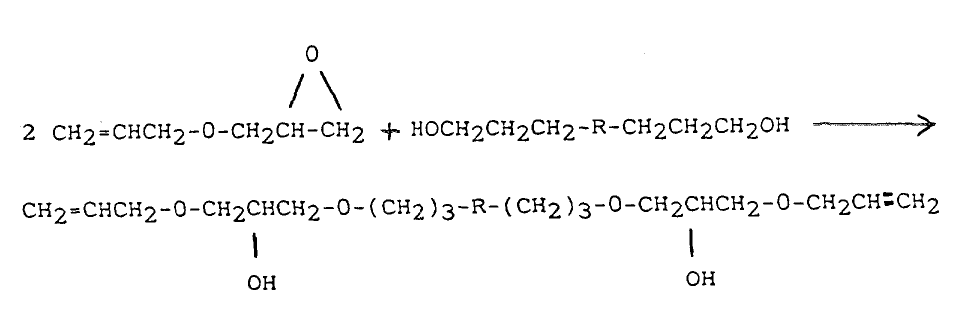

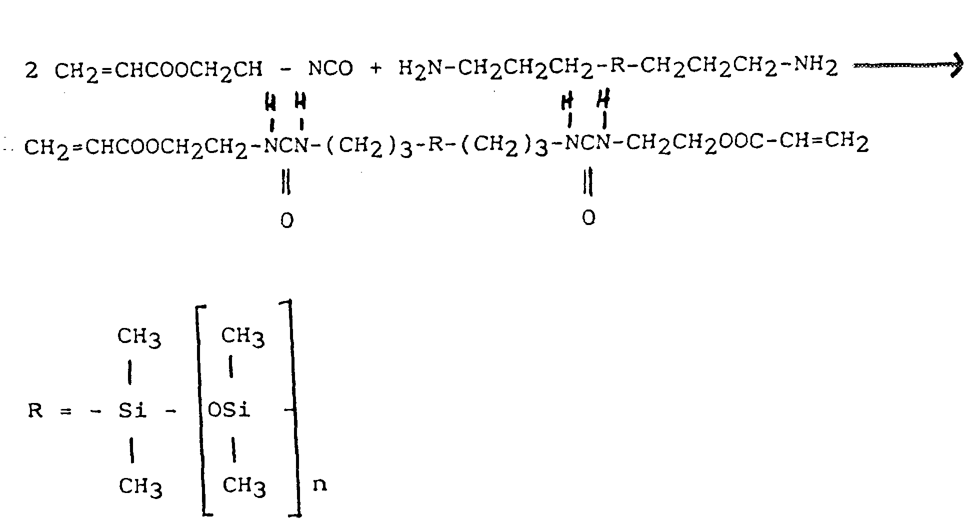

Es ist ebenfalls möglich, daß diese Reaktionen erst stattfinden, wenn das ungesättigte Dicarbonsäureanhydrid, die ungesättigte Glycid-Verbindung oder die ungesatrigte Isocyanat-Verbindung bereits copolymerisiert sind. Das heißt, daß das funktionelle Polysiloxan über reaktive Gruppen des Copolymeren mit dem Copolymeren verknüpft wird. Auch die Struktureinheiten der Dicarbonsäurehalbester und der Dicarbonsäurehalbamide aus der Gruppe (c), die die Copolymerisate enthalten, können bereits im Monomeren vorgebildet sein; genauso ist es aber auch möglich, daß sich diese Struktureinheiten erst während oder nach der Polymerisation aus Dicarbonsäuren oder Dicarbonsäureanhydriden und den entsprechenden Alkoholen oder Aminen bilden.

Nach Fertigstellung der Copolymerisate werden sie in eine wäßrige Lösung oder Dispersion überführt, wozu Wasser und eine Basenmenge zugemischt werden, die ausreichend ist, um eine Teilneutralisation der Carboxylgruppen bzw. der Säureanhydridgruppen zu bewirken. Die Basenmenge wird so gewählt daß sich bevorzugt ein pH-Wert zwischen 5 und 9 in der wäßrigen Lösung oder Dispersion einstellt. Als Neutralisationsmittel eignen sich Alkalimetallhydroxyde, Amine und Ammoniak.

Die so erhältlichen wäßrigen Copolymerisatdispersionen eignen sich zur Behandlung von allen üblich gegerbten Häuten und Pelzfellen. Die gegerbten Häute werden üblicherweise vor der Behandlung entsäuert. Sie können vor oder nach der Behandlung mit den Copolymerisaten gefärbt werden.

Die Behandlung der gegerbten Häute mit den Copolymerisaten erfolgt in wäßriger Flotte, die durch Verdünnen der Copolymerisatdispersionen mit Wasser erhältlich ist, bei pH-Werten zwischen 4 und 9 und Temperaturen von 20 bis 60 °C wahrend eines Zeitraumes von vorzugsweise 20 bis 90 Minuten durch beispielsweise Walken in einem Faß.

Die Einsatzmenge an Copolymerisat-Feststoff, bezogen auf das Falzgewicht des Leders oder das Naßgewicht der Pelzfelle, beträgt vorzugsweise 2 - 15 Gew.-%. Die Flottenlänge beträgt üblicherweise 30 bis 500 %. Im Anschluß an diese Behandlung wird der pH-Wert der wäßrigen Flotte durch Zusatz von Säuren, vorzugsweise Ameisensäure, auf 3 - 4 abgesenkt; die Leder oder Pelzfelle werden anschließend mit Wasser gespült, getrocknet und auf übliche Weise weiterverarbeitet.

Die Mitverwendung von bekannten Nachgerbstoffen oder üblichen Fettungsmitteln wie z. B. auf Basis von sulfatierten oder sulfierten Ölen und Fetten oder Hydrophobiermitteln wie z. B. auf Basis von Paraffinen oder Phosphorsäureestern ist möglich und kann vor, während oder nach der Behandlung mit den Copolymerisaten erfolgen.

Die Leder und Pelzfelle erhalten durch die Ausrüstung mit den Copolymerisaten einen sehr schönen, weichen und vollen Griff mit einem gleichmäßigen Narbenbild. Die wasserabweisenden Eigenschaften der Leder/Pelzfelle sind ausgezeichnet, ohne daß eine nachträgliche Fixierung mit Mineralsalzen erfolgen muß.

Die Prüfung der ausgerüsteten Leder auf Wasseraufnahme und Wasserdurchlässigkeit erfolgt mit dem Bally-Penetrometer und über die Anzahl der Knickungen im Maeser-Prüfgerät.

Die Erfindung wird im folgenden durch Ausführungsbeispiele näher erläutert.

### Herstellung der Copolymerisatdispersionen

### Dispersion I

### Herstellung des Monomeren mit Polysiloxangruppe

In einen Dreihals-Glaskolben mit Rührer und Kühler werden 800 g alpha, omega-Hydroxypropylpolydimethylsiloxan (Tegomer H-Si 2311, Th. Goldschmidt AG), 63 g Maleinsäureanhydrid und
0,5 g Tributylamin eingefüllt und für 2 Stunden auf 120° C erwärmt.
Man erhält in quantitativer Ausbeute den Maleinsäurehalbester des eingesetzten Dihydroxypolysiloxan.

### Herstellung des Copolymerisates

In einem Reaktor mit Rührer und Dosiervorrichtungen werden 300 g Octadecen-1 vorgelegt und auf 140°C erwärmt. Während 3 Stunden dosiert man kontinuierlich eine Mischung A, bestehend aus 800 g des oben hergestellten Maleinsäurehalbesters 300 g Acrylsäure und 60 g Dodecylmercaptan sowie eine Lösung B, bestehend aus 100 g Butylglykol, 20 g tert.-Butylperoxy-2-ethylhexanoat und 20 g Di-tert.-Butylperoxid zu. Anschließend wird eine weitere Stunde bei 140°C gerührt und dann auf 100° C abgekühlt. Man gibt dann eine auf 70° C erwärmte Lösung von 300 g Natronlauge 45 %ig und 3680 g Wasser zu und rührt, bis eine homogene Dispersion entstanden ist. Nach dem Abkühlen erhält man eine weiche Paste mit 30% Wirksubstanz, die beliebig mit Wasser verdünnt werden kann. Das Copolymerisat enthält 21,5 Gew.-% Octadecen-1, 57 Gew.-Polysiloxanmonomer und 21,5 Gew.-% Acrylsäure einpolymerisiert.

### Dispersion II

In einem Reaktor mit Rührer und Dosiervorrichtungen werden 1000 g Octadecen-1 und 825 g alpha, omega-Hydroxypropyl-poly-dimethylsiloxan (Tegomer H-Si 2311, Th. Goldschmidt AG) auf 130° C erwärmt. Über 4 Stunden dosiert man kontinuierlich 66 g geschmolzenes Maleinsäureanhydrid, 30 g Di-tert.-Butylperoxid und 40 g tert.-Butylperoxy-2-ethylhexanoat sowie eine Mischung aus 580 g Acrylsäure und 100 g Dodecylmercaptan zu.
Anschließend rührt man weitere 2 Stunden bei 150° C, kühlt dann auf ca. 100° C ab und gibt eine auf 70° C erwärmte Mischung aus 540 g Natronlauge 45 %ig und 6040 g Wasser zu und rührt bei 90°C, bis eine homogene Dispersion entstanden ist. Nach dem Abkühlen erhält man eine viskose Dispersion mit ca. 30 % Wirksubstanz, die beliebig mit Wasser verdünnt werden kann. Das Copol merisat enthält 40,5 Gew.-% Octadecen-1, 36 Gew.-% Polysiloxanmonomer und 23,5 Gew.-% Acrylsäure einpolymerisiert.

### Dispersion III

In einen Reaktor mit Rührer und Dosiervorrichtungen legt man 700 g eines C₂₀ bis C₂₄ alpha-Olefingemisches und 200 g alpha, omega-Hydroxypropyl-polydimethylsiloxan (Tegomer H-Si 2311, Th. Goldschmidt AG) vor und erwärmt die Mischung auf 150° C.
Über 4 Stunden dosiert man 350 g geschmolzenes Maleinsäureanhydrid und eine Lösung aus 100 g Butylglykol, 30 g Di tert.-Butylperoxid und 10 g tert.-Butylperoxy-2-ethylhexanoat in den Reaktor.
Anschließend rührt man weitere 2 Stunden bei 150°C, kühlt dann auf 100° C ab und gibt 140 g Wasser zu. Anschließend dosiert man eine Mischung aus 380 g Natronlauge 45 %ig und 1800 g Wasser über 30 Minuten zu, wobei sich eine homogene Dispersion bildet. Nach dem Abkühlen erhält man eine weiche Paste mit 40 % Wirksubstanz, die beliebig mit Wasser verdünnt werden kann. Das Copolymerisat enthält 56 Gew.-% alpha-Olefin, 17 Gew.-% Polysiloxanmonomer und 27 Gew.-% Maleinsäureanhydrid einpolymerisiert.

### Dispersion IV

In einen Reaktor mit Rührer und Dosiervorrichtungen legt man 300 g Octadecen-1 vor und erwärmt auf 150° C. Über 4 Stunden dosiert man 250 g geschmolzenes Maleinsäureanhydrid, eine Mischung A aus 300 g Stearylmethacrylat, 40 g eines alpha, omega-Acryloxy-polydimethylsiloxan (Tegomer V-Si 2550, Th. Goldschmidt AG) und 30 g Dodecylmercaptan sowie eine Mischung B aus 50 g Ölsäuremethylester und 20 g Ditert.-Butylperoxid zu. Anschließend rührt man weitere 2 Stunden bei 150° C, kühlt dann auf ca. 100° C ab und gibt eine auf 70° C erwärmte Lösung aus 272 g Natronlauge 45 %ig und 1760 g Wasser zu und rührt bei 90° C, bis eine homogene Dispersion entstanden ist. Nach dem Abkühlen erhält man eine weiche Paste mit 35 % Wirksubstanz, die beliebig mit Wasser verdünnt werden kann. Das Copolymerisat enthält 67,5 Gew.-% hydrophobe Monomere, 4,5 Gew.-% Polysiloxanmonomer und 28 Gew.-% Maleinsäureanhydrid einpolymerisiert.

### Dispersion V

In einen Reaktor mit Rührer und Dosiervorrichtungen werden 490 g eines C₂₀ bis C24-alpha-Olefingemisches und 70 g Poly(dimethyl-siloxan-co-methylvinylsiloxan) mit einer Viskosität von 1000 mPas und einem Si-Vinylgehalt von 0,2 mol% vorgelegt und auf 130° C erwärmt. Aus verschiedenen Zuläufen werden dann gleichzeitig 70 g Acrylsäure, 30 g Di-tert-butylperoxid, 140 g Ölsäuremethyiester, 28 g Dodecylmercaptan sowie 210 g flüssiges Maleinsäureanhydrid innerhalb von zwei Stunden zudosiert. Nach einer weiteren Stunde Reaktionszeit bei 130° C läßt man auf 80° C abkühlen und fügt eine Mischung aus 252 g NaOH (50 %) und 2280 g Weichmacher zu und rührt eine weitere Stunde. Man erhält eine bei Ra :temperatur weiche Paste mit ca. 30 % Wirksubstanz, die beliebig mit Wasser verdünnt werden kann. Das Copolymerisat enthält 58,3 Gew.-% alpha-Olefin, 8,3 Gew.-% Polysiloxanmonomer und 33,3 Gew.-% hydrophile Monomere einpolymerisiert.

### Beispiele 1 bis 4

Chromgegerbtes Rindleder mit einer Falzstärke von 2,0 mm wurde auf pH 5 entsäuert und mit Wasser gewaschen. Anschließend wurden die Leder im Walkfaß mit den Copolymerisatdispersionen 50 Minuten bei 55° C behandelt bei einer Flottenlänge von 110 %. Danach wurde die Flotte mit Ameisensäure auf einen pH-Wert von 3,6 eingestellt und nach 30 Minuten die Leder abschließend gewaschen, ausgereckt und getrocknet.

Die Prüfergebnisse sind in der nachfolgenden Tabelle zusammengefaßt:

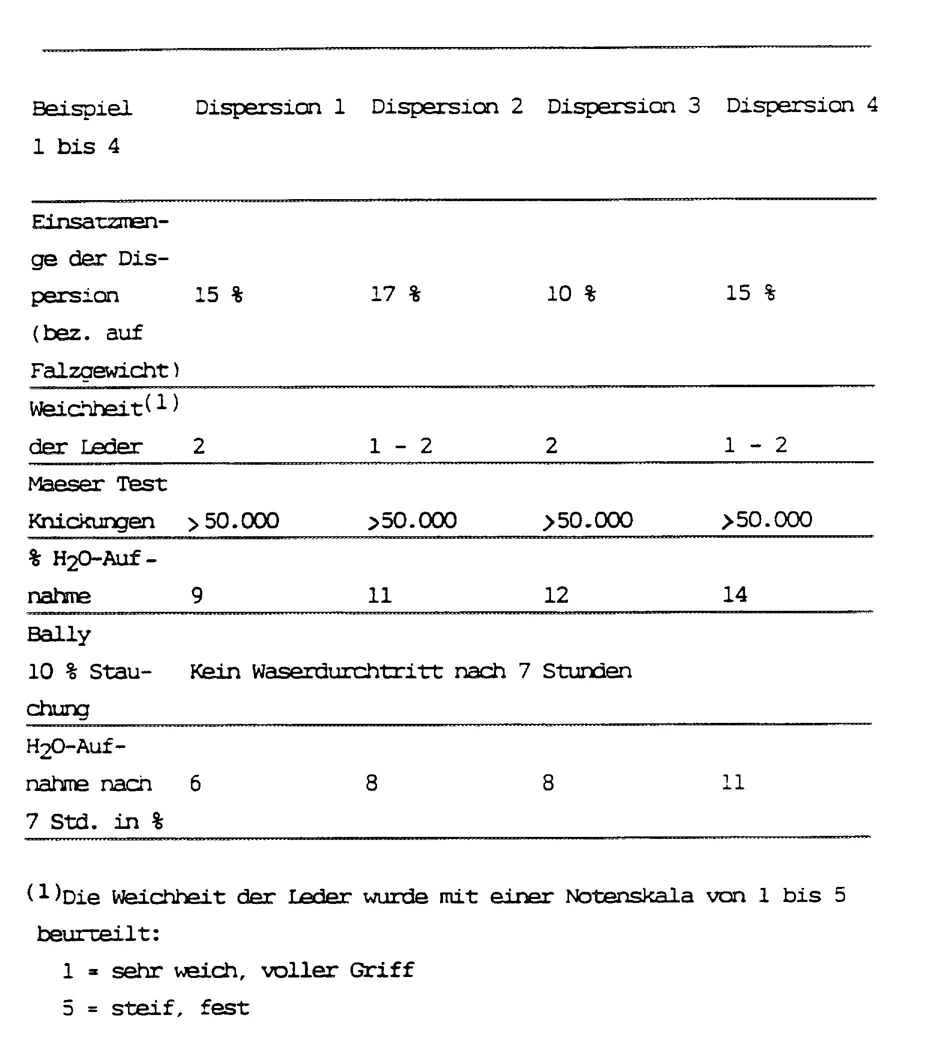

## Patentansprüche

1. Verwendung von Copolymerisaten, die
a) 20 bis 70 Gew.-% eines hydrophoben Monomeren, ausgewählt aus langkettigen alpha-Olefinen mit 12 bis 30 C-Atomen, langkettigen Alkyl(meth)acrylaten mit 12 bis 30 C-Atomen im Alkylteil, Vinylestern von langkettigen Carbonsäuren mit 12 bis 30 C-Atomen, langkettigen Vinyläthern mit 12 bis 30 C-Atomen oder Mischungen dieser Monomeren,
b) 1 bis 60 Gew.-% eines oder mehrerer Monomeren mit einer Polysiloxangruppe der Formeln (I) und/oder (II):
A - Si(R¹)₂ - [OSi(R¹)₂] n - R (I)
(R¹)₃Si [OSi(R¹)₂]n [OsiR¹A]_{z} Si(R¹)₃ (II)
wobei die Struktureinheiten [OSi(R¹)₂] und [OSiR¹A] in Formel (II) statistisch über die Kette verteilt sein sollen und worin R¹ = Phenyl oder Methyl, R = A, Phenyl oder Alkyl mit 1 bis 30 C-Atomen, n = 2 - 100, z = 1 - 3 bedeuten und A eine ungesättigte, radikalisch polymerisierbare Gruppe ist, ausgewählt aus:
CH₂ = CH - (CH₂)ₘ ―,
CH₂ = CH - CH₂ - X - (CH₂)p ―, 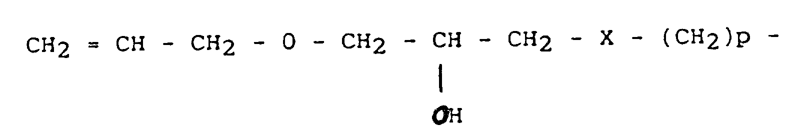 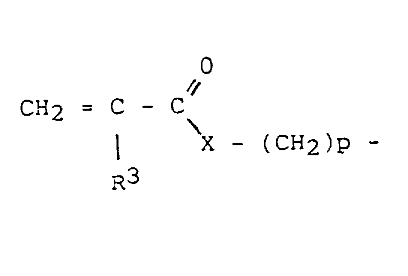 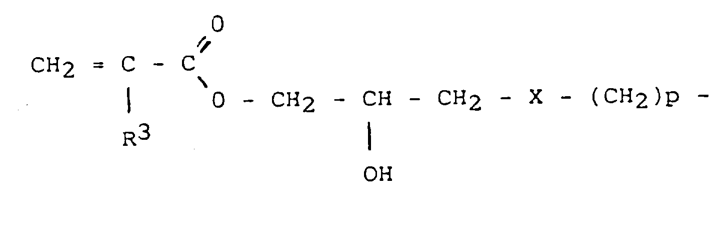 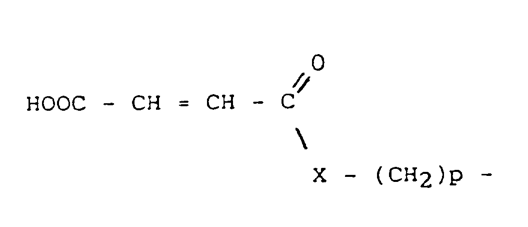 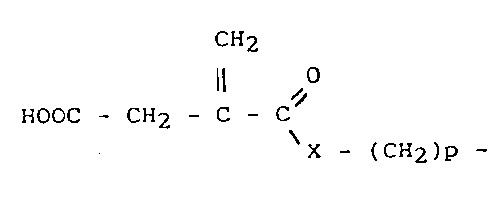
oder 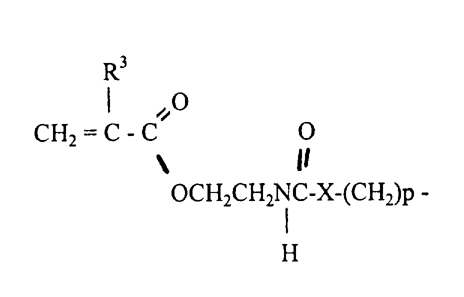 und m = 0 bis 10, p = 1 bis 4, R³ = H oder CH₃ und X = 0 oder NH bedeuten,
c) 20 bis 35 Gew.-% wasserlösliche ungesättigte, polymerisierbare, säuregruppentragende Monomere und/oder ungesättigte C₄-C₆ Dicarbonsäureanhydride und/oder Halbester oder Halbamide von ungesättigten C₄-C₆ Dicarbonsäuren oder Mischungen dieser Monomeren einpolymerisiert enthalten, in teilneutralisierter Form als wäßrige Lösung oder Dispersion zur Weichmachung, Fettung oder zur Hydrophobausrüstung von Leder und Pelzfellen.

2. Verwendung von Copolymerisaten nach Anspruch 1, dadurch gekennzeichnet, daß sich die Summe aus a), b) und c) zu 100 Gew.-% addiert.

3. Verwendung von Copolymerisaten nach Anspruch 1 oder 2, dadurch gekennzeichnet, daß die Copolymeren in einer Menge von 2 bis 15 Gew.-% Aktivsubstanz, bezogen auf das Falzgewicht der Leder und Pelze, eingesetzt werden.

4. Verwendung von Copolymerisaten nach Ansprüchen 1, 2 oder 3, dadurch gekennzeichnet, daß die Copolymeren in Kombination mit üblichen Hydrophobiermitteln eingesetzt werden.

5. Verwendung von Copolymerisaten nach Ansprüchen 1, 2 oder 3, dadurch gekennzeichnet, daß die Copolymeren in Kombination mit üblichen Fettungsmitteln eingesetzt werden.

## Claims

1. The use of copolymers having incorporated by polymerisation
a) 20 to 70%-wt. of a hydrophobic monomer selected from long-chain alpha-olefins with 12 to 30 C-atoms, long-chain alkyl(meth) acrylates with 12 to 30 C-atoms in the alkyl section, vinyl esters of long-chain carboxylic acids with 12 to 30 C-atoms, long-chain vinyl ethers with 12 to 30 C-atoms, or mixtures of these monomers,
b) 1 to 60%-wt. of one or more monomers with a polysiloxane group according to formulas (I) and/or (II):
A - Si (R¹)₂ - [OSi(R¹)₂]ₙ - R (I)
(R¹)₃Si [OSi(R¹)₂] n [OSiR¹ A]_{z} Si(R¹)₃ (II)
wherein the structural units [OSi(R¹)₂] and [OSiR¹A] in formula (II) are to be distributed randomly over the chain and wherein R¹ = phenyl or methyl, R = A, phenyl or alkyl with 1 to 30 C-atoms, n = 2 - 100, z = 1 - 3, and A is an unsaturated, radically polymerisable group selected from:
CH₂ = CH - (CH₂)ₘ ―,
CH₂ = CH - CH₂ - X - (CH₂)p ―, 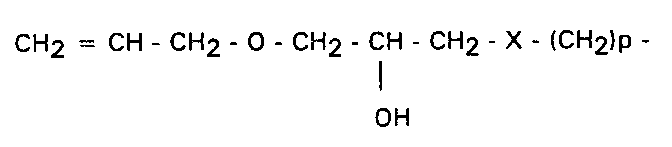 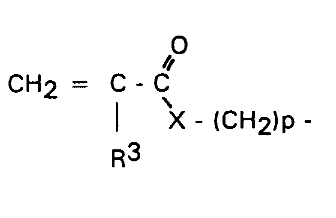 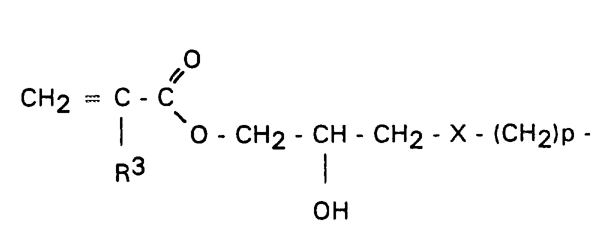 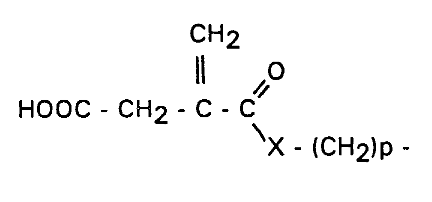 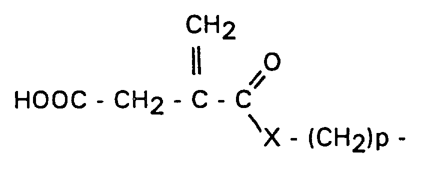
or 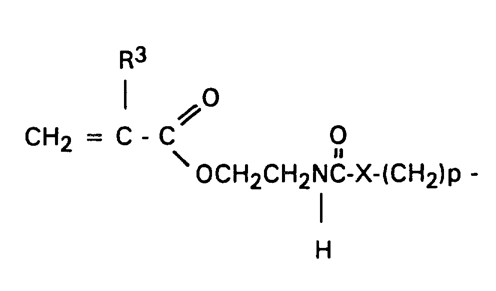 and m = 0 to 10, p = 1 to 4, R³ = H or CH₃, and X = 0 or NH,
c) 20 to 35%-wt. water-soluble, unsaturated, polymerisable, acid-groups-containing monomers and/or unsaturated C₄-C₆ dicarboxylic acid anhydrides and/or semi-esters or semi-amides of unsaturated C₄-C₆ dicarboxylic acids, or mixtures of these monomers, in partially neutralised form as aqueous solution or dispersion, for the softening, fat-liquoring, or hydrophobing of leather and furs.

2. The use of the copolymers according to claim 1 characterised in that the sum of a), b), and c) adds up to 100%-wt.

3. The use of the copolymers according to claim 1 or 2 characterised in that the copolymers are used in an amount of 2 to 15%-wt. of active substance, relative to the shaved weight of the leathers and furs.

4. The use of the copolymers according to claims 1, 2, or 3 characterised in that the copolymers are used in combination with conventional hydrophobing agents.

5. The use of the copolymers according to claims 1, 2, or 3 characterised in that the copolymers are used in combination with conventional fat-liquoring agents.

## Revendications

1. Utilisation de copolymères qui contiennent
a) 20 à 70% en poids d'un monomère hydrophobe, choisi parmi les α-oléfines à longues chaînes, comportant de 12 à 30 atomes de carbone, les (méth)acrylates d'alkyle à longues chaînes, comportant de 12 à 30 atomes de carbone dans le groupement alkyle, les esters vinyliques d'acides carboxyliques à longues chaînes, comportant de 12 à 30 atomes de carbone, les éthers vinyliques comportant de 12 à 30 atomes de carbone, ou les mélanges de ces monomères,
b) 1 à 60% en poids d'un ou plusieurs monomères portant un groupe polysiloxane des formules I et/ou II :
A - Si(R¹)₂ - [OSi(R¹)₂]ₙ - R (I)
(R¹)₃Si [OSi(R¹)₂]ₙ [OSiR¹A]_{Z} Si(R¹)₃ (II)
où les unités de structure [OSi(R¹)₂] et [OSiR¹A] dans la formule (II) doivent être réparties de manière stochastique ou statistique dans la chaîne et dans lesquelles R¹ représente le radical phényle ou méthyle, R représente A, le radical phényle ou un radical alkyle qui comporte de 1 à 30 atomes de carbone, n a une valeur qui varie de 2 à 100, z a une valeur qui varie de 1 à 3 et A représente un radical insaturé, polymérisable par voie radicalaire, choisi parmi les suivants :
CH₂ = CH - (CH₂)ₘ ―
CH₂ = CH - CH₂ - X - (CH₂)p ― 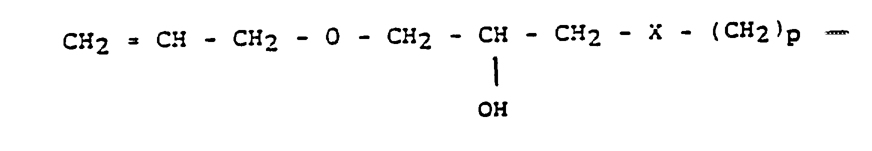 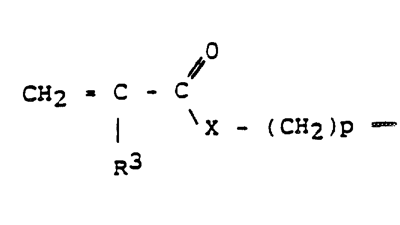 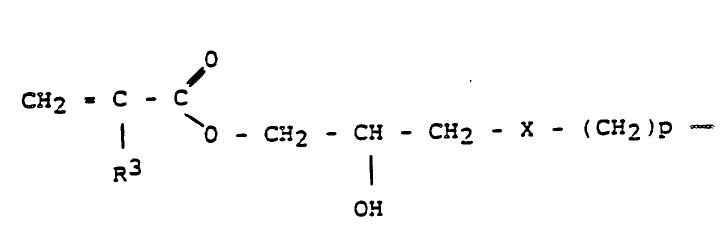 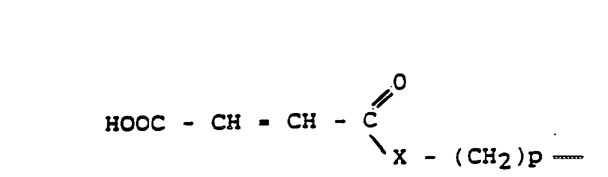 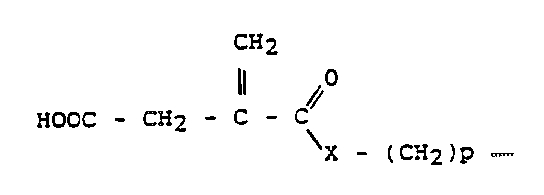
ou 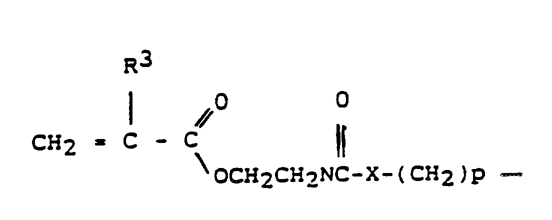 où m a une valeur qui varie de O à 10, p a une valeur qui varie de 1 à 4, R³ représente un atome d'hydrogène ou le radical méthyle et X représente un atome d'oxygène ou le radical NH,
c) 20 à 35% en poids de monomères portant des radicaux acide, polymérisables, insaturés, solubles dans l'eau et/ou d'anhydrides d'acides dicarboxyliques en C₄ à C₆ insaturés et/ou d'hémiesters ou d'hémiamides d'acides dicarboxyliques en C₄ à C₆ insaturés, ou de mélanges de ces monomères, incorporés par polymérisation, sous forme partiellement neutralisée, à titre de solution ou de dispersion aqueuse pour l'assouplissement, la nourriture ou l'hydrophobisation du cuir et des peaux à fourrure.

2. Utilisation de copolymères suivant la revendication 1, caractérisée en ce que la somme de a), b) et c) est égale à 100% en poids.

3. Utilisation de copolymères suivant la revendication 1 ou 2, caractérisée en ce que l'on utilise les copolymères en une proportion de 2 à 15% en poids de substance active par rapport au poids à l'état dérayé du cuir et des peaux.

4. Utilisation de copolymères suivant l'une quelconque des revendications 1, 2 et 3, caractérisée en ce que l'on utilise les copolymères en combinaison avec des agents d'hydrophobisation usuels.

5. Utilisation de copolymères suivant l'une quelconque des revendications 1, 2 et 3, caractérisée en ce que l'on utilise les copolymères en combinaison avec des agents de nourriture usuels.
